# EUROPÄISCHE PATENTSCHRIFT

(11) **EP 0 895 945 B1**
(45) Veröffentlichungstag und Bekanntmachung des Hinweises auf die Patenterteilung: **26.02.2003**
(21) Anmeldenummer: 98114276.3
(22) Anmeldetag: 30.07.1998
(51) Int. Cl.: B65D 83/14, B65D 79/02, G01K 1/04

(54) **Behälter für Montageschaum**
Container for construction foam
Récipient pour mousse de montage

(30) Priorität: 08.08.1997 DE 19734418
(43) Veröffentlichungstag der Anmeldung: 10.02.1999
(73) Patentinhaber: Adolf Würth GmbH & Co. KG, 74653 Künzelsau (DE)
(72) Erfinder: Burkert, Gebhard, 74673 Mulfingen-Jagstberg (DE)
(74) Vertreter: Patentanwälte Ruff, Wilhelm, Beier, Dauster & Partner

(56) Entgegenhaltungen:
- EP-A- 0 512 579
- DE-A- 3 614 835
- US-A- 2 319 101
- US-A- 3 521 488
- US-A- 3 933 276
- US-A- 4 538 926

## Beschreibung

Die Verwendung von Montageschaum, beispielsweise Einkomponentenschaum, hat sich in vielen Fällen durchgesetzt, beispielsweise auf dem Bau. Der Schaum ist dabei in üblicherweise metallischen Behältern enthalten. Er wird mit Ausgabegeräten, beispielsweise in Pistolenform, abgegeben. Es ist bekannt, daß der Schaum erst bei einer bestimmten Mindesttemperatur verarbeitet werden soll. Wird er bei zu niedriger Temperatur ausgegeben, so sind die Arbeitsergebnisse schlecht. Trotz vieler Hinweise wird dies aber häufig übersehen.

Es ist bereits ein Flüssigkeitsbehälter bekannt (DE-A1-36 14 835), bei dem die Behälterwand mit einem dem Behälter auf Dauer integrierten Temperaturanzeiger versehen ist, der durch Farbumschlag das Erreichen der Solltemperatur bzw. der Mindesttemperatur anzeigt.

Weiterhin bekannt ist die Möglichkeit, an der Außenseite einer Flasche ein Temperaturanzeigeelement anzubringen, das bei Erreichen einer bestimmten Temperatur einen Farbumschlag bewirkt (US 4,538,926 A1).

Beide bekannten Einrichtungen sind in erster Linie für die Beurteilung von Lebensmitteln gedacht.

Zur Messung der Luftfeuchtigkeit sind Hygrometer bekannt, bei denen es sich um relativ große mit Zeigern versehene Anzeigeinstrumente handelt (US 3,521,488 A1).

Im Winter werden solche Dosen häufig in heißes Wasser gestellt, um sie auf Betriebstemperatur zu bringen. Wenn nun der Benutzer den richtigen Zeitpunkt versäumt, so kann es geschehen, daß die Dose zu warm wird und ggf. aufplatzt.

Der Erfindung liegt die Aufgabe zugrunde, die Qualität des Ergebnisses der Verarbeitung von Schaum, Aerosol oder dergleichen bei gleichzeitiger Verbesserung der Sicherheit zu verbessern.

Zur Lösung dieser Aufgabe schlägt die Erfindung einen Behälter mit den im Anspruch 1 genannten Merkmalen vor. Weiterbildungen der Erfindung sind Gegenstand von Unteransprüchen.

Die Behälter werden auf der Baustelle verarbeitet und, sobald sie leer sind, zurückgegeben. Es ist auf der Baustelle nicht möglich, eine exakte Messung der Temperatur der Dosen mit Hilfe von getrennten Thermometern durchzuführen. Ist jedoch an der Dose eine Temperaturanzeige vorhanden, so braucht der Benutzer diese nur anzusehen und kann sofort erkennen, ob er den Schaum verarbeiten kann oder nicht. Die Temperaturanzeige kann so einfach gestaltet werden, daß auch ungeübtes und nicht fachkundiges Personal nur solche Behälter verarbeitet, bei denen der Schaum die korrekte Temperatur hat.

Die Qualität der Verarbeitung von Schaum ist neben der Temperatur auch von der Feuchtigkeit abhängig. Hier schlägt die Erfindung nun zusätzlich vor, auf der Oberfläche des Mantels des Behälters eine Feuchtigkeitsanzeige anzubringen, die natürlich nicht die Feuchtigkeit des Behälters, sondern die Feuchtigkeit der Umgebungsluft anzeigt.

Insbesondere kann in Weiterbildung der Erfindung vorgesehen sein, daß die Temperaturanzeige einen Temperaturmeßstreifen aufweist. Solche Temperaturmeßstreifen sind bekannt. Sie ändern je nach Temperatur ihre Farbe, so daß beispielsweise die korrekte Temperatur, sobald sie erreicht wird, durch einen Farbumschlag angezeigt wird.

Die Verwendung von solchen Temperaturmeßstreifen macht es auch möglich, zu erkennen, wie weit die tatsächliche Temperatur des Behälters noch von der erforderlichen oder günstigen Temperatur entfernt ist. Damit kann dem Benutzer ein Hinweis gegeben werden, wie lange er unter Umständen noch warten muß, bis der Behälter die richtige Temperatur hat. Insbesondere kann in Weiterbildung vorgesehen sein, daß der Temperaturmeßstreifen in Längsrichtung des Behälters angeordnet wird.

In Weiterbildung kann vorgesehen sein, daß neben dem Temperaturmeßstreifen eine Markierung angeordnet wird, die den für die Verarbeitung zulässigen Temperaturbereich angibt.

In Weiterbildung kann vorgesehen sein, daß die Feuchtigkeitsanzeige in Form eines Streifens angeordnet wird, der insbesondere parallel zu dem Temperaturmeßstreifen verläuft. Der Verwender eines solchen Behälters kann nun mit einem Blick sowohl die Temperatur des Inhalts des Behälters als auch die Feuchtigkeit der Umgebung erkennen, so daß hier eine Kombinationswirkung zwischen einer Anzeige für den Inhalt des Behälters und einer Anzeige für die Umgebung entsteht.

Insbesondere kann vorgesehen sein, daß beide Streifen in gleicher Orientierung zunehmender Anzeigewerte angeordnet sind. Beispielsweise kann die Orientierung so gewählt werden, daß bei auf einer Unterlage stehendem Behälter die zunehmenden Werte von unten nach oben orientiert sind.

Insbesondere kann vorgesehen sein, daß der Bereich der günstigsten Verarbeitungsparameter bei beiden Streifen etwa an der gleichen Stelle angeordnet ist.

Weitere Merkmale, Einzelheiten und Vorzüge der Erfindung ergeben sich aus der folgenden Beschreibung einer bevorzugten Ausführungsform der Erfindung, den Patentansprüchen, deren Wortlaut zum Inhalt der Beschreibung gemacht wird, sowie anhand der Zeichnung. Hierbei zeigen:
- Fig. 1: eine Seitenansicht eines Druckbehälters für Einkomponentenschaum;
- Fig. 2: in vergrößertem Maßstab die Anordnung einer Feuchtigkeitsanzeige neben einer Temperaturanzeige.

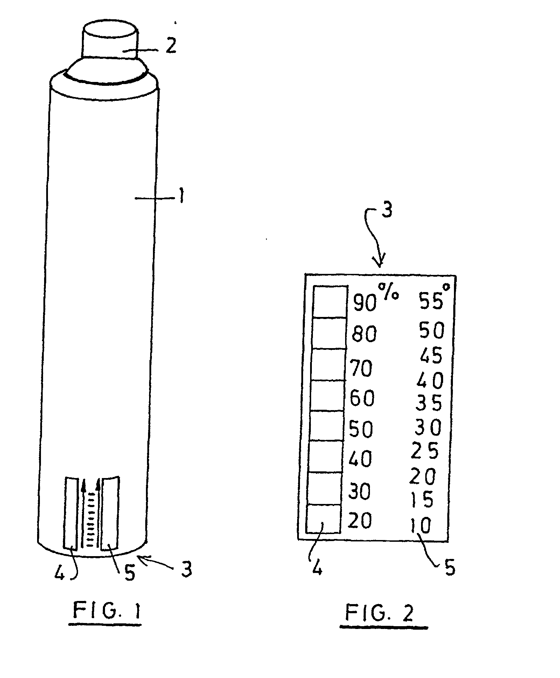

Der in Fig. 1 zu sehende Behälter 1 weist die Form eines Zylinders auf. An seinem in der Fig. 1 oberen Ende enthält er eine Ausgabeeinrichtung 2, die nicht näher erläutert wird. Mit dieser Einrichtung kann er an einer Ausgabepistole befestigt werden.

Im Bereich des Bodens ist auf der Oberfläche des Behälters 1 eine kombinierte Anzeige 3 für Feuchtigkeit und für Temperatur angeordnet. Beide Anzeigen sind in Form von Streifen ausgebildet, die in Längsrichtung des Behälters 1 verlaufen. Beide Streifen verlaufen etwa parallel zueinander und enthalten in dem Zwischenraum zwischen ihnen eine Markierung, eine Skala oder dergleichen. Beide Anzeigen sind so orientiert, daß von unten nach oben fortschreitend die Anzeigewerte zunehmen. Beispielsweise ist der linke Streifen 4 für die Anzeige der Feuchtigkeit gedacht, während der rechte Streifen 5 die Temperatur des Behälters angezeigt.

In vergrößertem Maßstab ist diese Anzeige 3 in Fig. 2 zu sehen. Rechts sind die Temperaturwerte des Streifens 5 aufgezeichnet, wobei der Temperaturmeßstreifen so ausgebildet ist, daß die jeweils aktuelle Temperatur durch einen Farbwechsel angezeigt wird, beispielsweise dadurch, daß die Temperaturanzeige grün wird.

Der Streifen 4 für die Feuchtigkeitsanzeige besteht aus mehreren einzelnen Abschnitten, die jeweils bei Erreichen der entsprechenden relativen Luftfeuchtigkeit ebenfalls einen Farbumschlag anzeigen. Die Werte neben diesem Streifen sind Angaben über die relative Luftfeuchtigkeit.

Die Erfindung wurde in diesem Ausführungsbeispiel anhand eines Druckbehälters für Einkomponentenschaum beschrieben. Sie kann in der gleichen Weise Anwendung finden bei Behältern für Mehrkomponentenschaum, bei denen ebenfalls eine bestimmte Verarbeitungstemperatur für ein gutes Arbeitsergebnis erforderlich ist. Die Behälter für Mehrkomponentenschäume brauchen keine Druckbehälter zu sein.

In allen Fällen kann das Arbeitsergebnis dadurch verbessert werden, daß der Verwender sehr einfach erkennen kann, ob die erforderliche Betriebstemperatur erreicht ist, ggf. auch die gewünschte Luftfeuchtigkeit. Die Anordnung einer Temperaturanzeige für einen größeren Bereich macht es dem Verwender auch möglich, wenn er die Behälter beispielsweise in heißem Wasser erwärmt, ungefähr abschätzen zu können, wie lange es noch dauert, bis die Temperatur erreicht sein wird.

Die Erfindung ist anwendbar bei Montageschäumen, ob es sich nun um Einkomponenten- oder Mehrkomponentenschäume handelt, bei Aerosolen und auch bei pastösen Massen, wenn diese eine bestimmte Verarbeitungstemperatur haben sollen.

## Patentansprüche

1. Mit Montageschaum, Aerosol oder pastöser Masse gefüllter Behälter mit
1.1 einem Mantel,
1.2 einer Ausgabeeinrichtung (2) für den Schaum, das Aerosol oder die pastöse Masse, sowie mit
1.3 einer Temperaturanzeige, die
1.3.1 auf der Außenseite des Mantels angebracht ist,
1.3.2 von der Außenseite her ablesbar ist und
1.3.3 die Temperatur des Behälter anzeigt,
**gekennzeichnet durch**
1.4 eine Feuchtigkeitsanzeige, die auf der Oberfläche des Mantels angeordnet ist und die Feuchtigkeit der Umgebungsluft anzeigt.

2. Behälter nach Anspruch 1, bei dem die Temperaturanzeige einen Temperaturmessstreifen (5) aufweist.

3. Behälter nach Anspruch 2, bei dem der Temperaturmessstreifen (5) in Längsrichtung des Behälters angeordnet ist.

4. Behälter nach Anspruch 2 oder 3, mit einer den für die Verarbeitung des Schaums zulässigen Temperaturbereich angebenden Markierung neben dem Temperaturmessstreifen (5).

5. Behälter nach einem der vorhergehenden Ansprüche, bei dem die Feuchtigkeitsanzeige die Form eines Streifens (4) aufweist, der parallel zu dem Temperaturmessstreifen (5) angeordnet ist.

6. Behälter nach Anspruch 5, bei dem beide Streifen (4, 5) in gleicher Orientierung zunehmender Anzeigewerte angeordnet sind.

7. Behälter nach einem der vorhergehenden Ansprüche, bei dem der Bereich der günstigsten Verarbeitungsparameter beider Anzeigen etwa an der gleichen Stelle liegt.

## Claims

1. Container filled with assembly foam, aerosol or pasty material having
1.1 a casing,
1.2 a dispensing device (2) for the foam, aerosol or pasty material, as well as with
1.3 a temperature indication, which
1.3.1 is fitted to the outside of the casing,
1.3.2 can be read from the outside and
1.3.3 indicates the temperature of the container,
**characterized by**
1.4 a moisture indication located on the surface of the casing and indicating the moisture of the ambient air.

2. Container according to claim 1, wherein the temperature indication has a temperature measuring strip (5).

3. Container according to claim 2, wherein the temperature measuring strip (5) is located in the longitudinal direction of the container.

4. Container according to claim 2 or 3, with a marking indicating the temperature range admissible for the processing of the foam, alongside the temperature measuring strip (5).

5. Container according to one of the preceding claims, wherein the moisture indication is in the form of a strip (4), positioned parallel to the temperature measuring strip (5).

6. Container according to claim 5, wherein the two strips (4, 5) are arranged with the same orientation of increasing indicated values.

7. Container according to one of the preceding claims, wherein the range of the most favourable processing parameters of both indications is roughly at the same point.

## Revendications

1. Récipient rempli de mousse de montage, d'un aérosol ou d'une masse pâteuse avec
1.1 une enveloppe,
1.2 un dispositif de distribution (2) pour la mousse, l'aérosol ou la masse pâteuse, ainsi
1.3 qu'un affichage de température qui est ménagé sur la face externe de l'enveloppe et
1.3.3 qui indique la température du récipient,
**caractérisé par**
1.4 un affichage de l'humidité qui est disposé sur la surface de l'enveloppe et qui affiche l'humidité de l'air ambiant.

2. Récipient selon la revendication 1, où l'affichage de température présente une bande thermométrique (5).

3. Récipient selon la revendication 2, où la bande thermométrique (5) est disposée dans le sens longitudinal du récipient.

4. Récipient selon la revendication 2 ou 3, avec une marque indiquant la plage de température admissible pour le traitement de la mousse, la marque étant placée à côté de la bande thermométrique (5).

5. Récipient selon l'une des revendications précédentes où l'affichage de l'humidité présente la forme d'une bande (4) qui est disposée parallèlement à la bande thermométrique (5).

6. Récipient selon la revendication 5, où les deux bandes (4, 5) sont disposées dans la même orientation de valeurs affichées croissantes.

7. Récipient selon l'une des revendications précédentes, où la plage des paramètres avantageux de traitement des deux affichages se trouve approximativement à la même place.
